# FASCICULE DE BREVET EUROPEEN

(11) **EP 2 839 233 B1**
(45) Date de publication et mention de la délivrance du brevet: **25.12.2019**
(21) Numéro de dépôt: 13716816.7
(22) Date de dépôt: 18.04.2013
(51) Int. Cl.: F28D 9/00

(54) **ÉCHANGEUR DE CHALEUR**
WÄRMETAUSCHER
HEAT EXCHANGER

(30) Priorité: 19.04.2012 FR 1253620
(43) Date de publication de la demande: 25.02.2015
(73) Titulaire: Valeo Systemes Thermiques, 78320 Le Mesnil-Saint-Denis (FR)
(72) Inventeur: FERLAY, Benjamin, F-78720 Cernay La Ville (FR)
(74) Mandataire: Metz, Gaëlle
(86) Numéro de dépôt international: PCT/EP2013/058122
(87) Numéro de publication internationale: WO 2013/156577

(56) Documents cités:
- EP-A1- 0 724 129
- EP-A1- 1 830 048
- EP-A2- 1 296 108
- WO-A1-2007/038871
- DE-A1-102009 025 282
- DE-A1-102011 076 871
- FR-A1- 2 614 980
- FR-A1- 2 742 533
- FR-A1- 2 803 907
- FR-A1- 2 908 832
- FR-A1- 2 948 755
- JP-A- H1 082 593

## Description

L'invention concerne un échangeur de chaleur comprenant un faisceau comprenant un couvercle. Un tel échangeur de chaleur est connu de DE102011076871.

Elle comprend également un module d'admission d'air pour moteur thermique comprenant un tel échangeur.

L'invention s'applique à tout type d'échangeurs de chaleur, notamment pour véhicule automobile, comme par exemple des échangeurs destinés à être montés dans le compartiment moteur du véhicule tels que des refroidisseurs d'air de suralimentation (RAS) ou des échangeurs de recirculation des gaz d'échappement du moteur, appelés également échangeurs EGR (Exhaust Gas Recirculation Coolers ou EGRC).

Dans ce domaine, il est connu des échangeurs de chaleur comprenant un faisceau d'échange de chaleur comportant une série de plaques empilées parallèlement les unes au dessus des autres. Le faisceau est placé dans un boîtier guidant un fluide à refroidir à travers le faisceau dans lequel circule un fluide de refroidissement. L'empilement de plaques est solidarisé à un couvercle de l'échangeur qui ferme une des faces du boîtier de façon amovible, notamment par vissage.

Un problème rencontré vient du fait que le boîtier et le couvercle sont amenés à subir des contraintes mécaniques lorsque l'échangeur de chaleur fonctionne. Ces contraintes peuvent entraîner la déformation du couvercle et altérer le faisceau.

L'origine de ces contraintes vient d'une part de la dilatation thermique que subit le boîtier lorsque le fluide à refroidir traverse le faisceau à de hautes températures. D'autre part, le fluide à refroidir traverse le faisceau avec une pression pouvant varier énormément et dans une période très courte, ce qui engendre des variations importantes des contraintes mécaniques exercées dans son circuit de passage. Ces contraintes mécaniques risquent de créer un gonflement du boîtier. Dans certaines conditions extrêmes de fonctionnement, on peut aller jusqu'à observer une expulsion du couvercle ou à l'apparition d'une fuite localisée entre le couvercle de l'échangeur et le boîtier.

Une première solution utilisée consiste à braser le couvercle sur le boîtier. Une telle solution nécessite cependant d'utiliser un boîtier métallique. En outre, le couvercle n'est plus amovible.

L'invention vise à améliorer la situation.

Ainsi, l'invention concerne un échangeur de chaleur selon la revendication 1.

On comprend par le terme « amovible » le fait de pouvoir être retiré sans détruire l'ensemble, c'est-à-dire que l'on peut retirer le couvercle du boîtier sans détruire ni le couvercle ni le boîtier comme cela serait le cas avec d'autres types de solidarisation tels qu'une solidarisation par brasage ou encore par soudage. Un exemple de fixation amovible est la fixation par vissage ou encore par rivetage.

L'invention permet ainsi, grâce aux moyens de renfort mécanique de la paroi, d'améliorer la résistance mécanique du couvercle et donc de réduire l'amplitude de la déformation du couvercle lorsque ce dernier subit des contraintes mécaniques.

Selon un aspect de l'invention, les moyens de renfort mécanique sont configurés pour venir extérieurement en saillie du boîtier.

Selon un exemple de réalisation de l'invention, les moyens de renfort mécanique comprennent au moins une nervure de renforcement mécanique. Les nervures se trouvent, par exemple, au niveau d'une partie centrale de la paroi, c'est-à-dire dans une zone différente de celle occupée par le bord relevé.

Avantageusement, la ou les nervures sont réalisées par emboutissage de la paroi.

Selon une variante de réalisation de l'invention, tout ou partie des nervures, dites grandes nervures, s'étendent parallèlement entre elles selon une longueur dudit couvercle. Les moyens de renfort mécanique comprennent, par exemple, deux grandes nervures.

Selon un aspect de l'invention, au moins une autre des nervures, dite petite nervure, relie entre elles les grandes nervures. Les moyens de renfort mécanique comprennent, notamment, six petites nervures.

Selon un exemple de réalisation, les moyens de renfort mécanique comprennent au moins une barrette de renforcement mécanique solidarisée sur tout ou partie d'une périphérie dudit couvercle.

Selon un aspect de l'invention, une première des barrettes est solidarisée le long d'un premier grand coté du couvercle et/ou une deuxième des barrettes est solidarisée le long d'un deuxième grand coté du couvercle. Avantageusement, une troisième des barrettes est solidarisée le long d'un premier petit coté du couvercle et/ou une quatrième des barrettes est solidarisée le long d'un deuxième petit coté du couvercle.

Selon un exemple de réalisation, la ou les barrettes sont brasées sur le couvercle. Alternativement, la ou les barrettes sont maintenues sur le couvercle par clinchage. La ou les barrettes sont solidarisées au couvercle, par exemple, simultanément à la fixation dudit couvercle sur le boîtier.

Selon un aspect de l'invention, lesdits moyens de renfort comprennent au moins un arceau de renfort mécanique solidarisé à la paroi. Avantageusement, ledit arceau est solidarisé au niveau d'un premier et d'un deuxième grand coté du couvercle.

De manière avantageuse, l'arceau comprend au moins un point de solidarisation sur le bord relevé au niveau du premier grand coté dudit bord relevé et un point de solidarisation sur le bord relevé au niveau du deuxième grand coté dudit bord relevé.

Selon un aspect de l'invention, l'arceau comprend au moins un point de solidarisation à une face plane de ladite paroi. La face plane se trouve, notamment, au niveau de la partie centrale de la paroi.

Selon un exemple de réalisation de l'invention, l'arceau comprend des languettes solidarisées à ladite paroi au niveau du bord relevé et de la face plane.

La surélévation est, par exemple, de la forme d'un triangle isocèle, le sommet entre les deux cotés identiques étant le point le plus haut de la surélévation par rapport à la face plane.

L'invention concerne également un module d'admission d'air pour moteur thermique de véhicule automobile comprenant un échangeur tel que défini précédemment.

D'autres caractéristiques, détails et avantages de l'invention ressortiront plus clairement à la lecture de la description donnée ci-après à titre indicatif en relation avec des dessins dans lesquels :
- la figure 1 est une vue en perspective éclatée d'un échangeur de chaleur
- la figure 2 est une vue en perspective d'un couvercle et d'un faisceau,
- les figures 3 à 6 sont des vues en perspective de variantes de réalisation du couvercle
- la figure 7 est une vue de coté du couvercle de la figure 6 et du faisceau, illustré de façon schématique

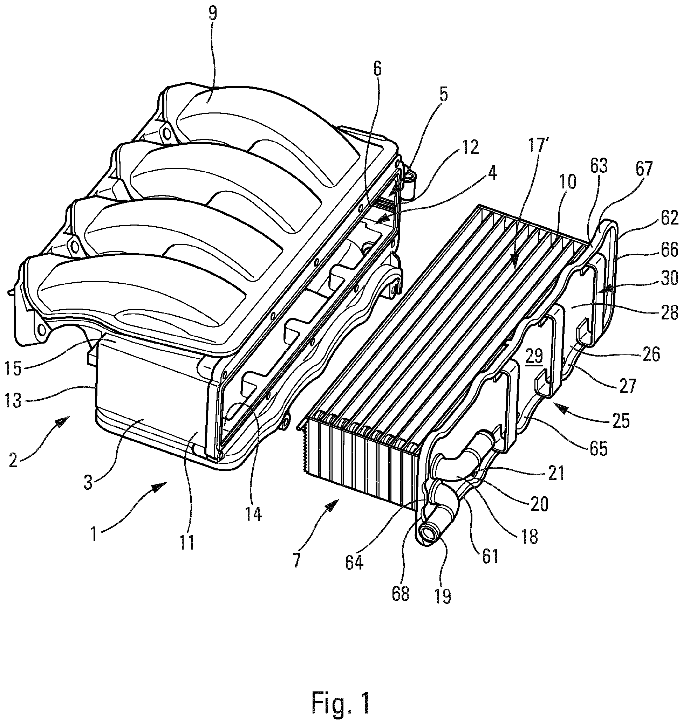

La figure 1 illustre un module d'admission d'air pour moteur thermique de véhicule automobile, ledit module comprenant un échangeur de chaleur 1. Ledit module d'admission d'air présente une sortie 9 de l'air d'admission en direction de la culasse du moteur. Ladite sortie 9 du module divise le flux d'air d'admission, ici en quatre flux distincts.

Ledit échangeur 1 permet un échange de chaleur entre un premier fluide, par exemple un fluide de refroidissement et un deuxième fluide, notamment un fluide à refroidir. Cet échangeur est apte à transférer les calories présentes dans le fluide à refroidir vers le fluide de refroidissement. C'est ici un échangeur air/eau, c'est-à-dire que le fluide à refroidir est, par exemple, un flux de gaz d'alimentation du moteur et le fluide de refroidissement est, notamment, de l'eau additionnée de glycol.

L'échangeur 1 comprend un boîtier 2 présentant un corps 3 qui prend, par exemple, une forme générale parallélépipédique creuse. La partie creuse de ce corps 3 forme un logement 4 accessible par un orifice 5 délimité par un rebord 6. Le boîtier 2 est ici obtenu par moulage. Il est, par exemple, en matière thermoplastique, en matière thermodure ou encore en aluminium.

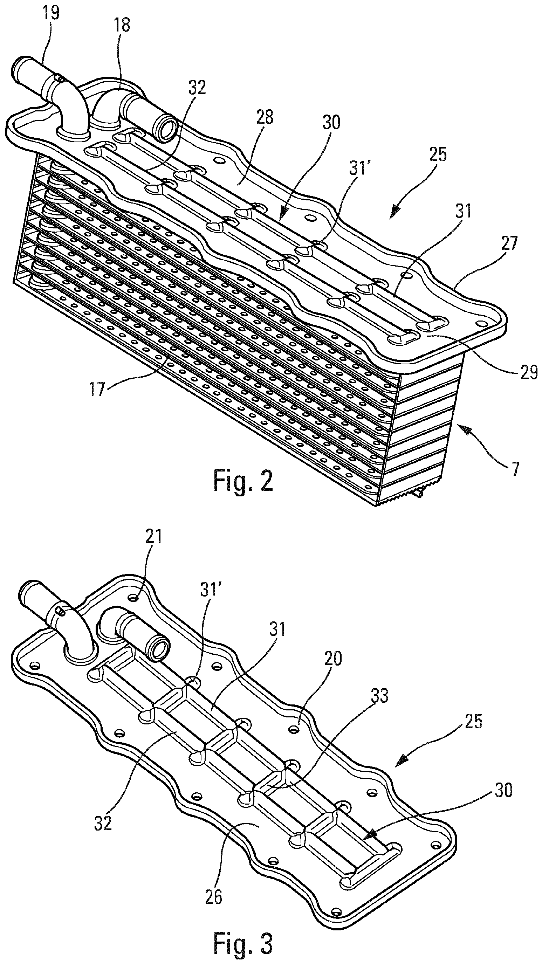

L'échangeur 1 comprend également un faisceau 7 destiné à être installé dans le boîtier 2, notamment dans le logement 4. Ce faisceau 7 est inséré par translation au travers de l'orifice 5. Le faisceau 7 comprend ici un empilement de plaques 10 déterminant entre elles des circuits alternés pour le fluide de refroidissement et pour le fluide à refroidir. Les plaques 10 sont agencées par paires de sorte que deux plaques 10 d'une même paire déterminent entre elles un canal de circulation pour le fluide de refroidissement. Le faisceau 7 est ici de forme globalement parallélépipédique et présente une face d'entrée (référencée 17 sur la figure 2) et une face de sortie opposée 17' du fluide à refroidir. Les circuits pour la circulation du fluide à refroidir sont prévus entre deux plaques 10 en vis-à-vis de deux paires de plaques adjacentes.

Le corps 3 présente deux faces latérales 11, 12, reliées par un fond 13 et deux faces longitudinales 14, 15, dite d'entrée 14 et de sortie 15 reliant les faces latérales. Les faces longitudinales 14, 15 comprennent chacune un cadre délimitant une ouverture. Le fluide à refroidir est ainsi destiné à entrer dans l'échangeur 1 par l'ouverture définie par le cadre de la face longitudinale d'entrée 14 avant de traverser le faisceau 7 et de sortir de l'échangeur 1 par l'ouverture délimitée par le cadre de la face longitudinale de sortie 15. Le fluide à refroidir sort ensuite du module d'admission par l'intermédiaire de sa sortie 9 comme vu précédemment.

Un couvercle 25 de l'échangeur de chaleur selon l'invention est solidarisé à l'empilement, au niveau d'une plaque supérieure de l'empilement. Le couvercle 25 est destiné à se solidariser au boîtier 2. Il comprend une paroi 26 agencée pour obturer l'orifice 5 par lequel on introduit le faisceau 7 dans le boîtier 2. La paroi 26 est configurée pour autoriser une fixation amovible du couvercle 25 sur le boîtier 2. Elle comprend pour cela, notamment, des moyens de solidarisation au boîtier 2, par exemple des ouvertures 21, en particulier prévues au niveau d'oreilles 20. Il est ainsi possible de visser ou de riveter le couvercle 25 au boîtier 2 et de le désolidariser du boîtier 2 sans destruction du couvercle 25 et/ou du boîtier 2.

Le faisceau 7 et le couvercle 25 sont, notamment, en aluminium ou en alliage d'aluminium.

Le couvercle 25 est ici de forme sensiblement rectangulaire. Il comprend alors un premier et un deuxième grands cotés 61, 63 opposés entre eux et un premier et un deuxième petits cotés 62, 64 opposés entre eux. Les premiers grands cotés 61, 63 du couvercle 25 se trouvent respectivement du même coté que la face d'entrée et que la face de sortie 17' du faisceau 7.

La paroi 26 comprend une première face destinée à être dirigée vers l'intérieur du boîtier 2 et une deuxième face 29, opposée à la première et destinée à être dirigée vers l'extérieur du boîtier 2. Sous réserve des explications qui suivent, la première et la deuxième faces 29 sont sensiblement planes. Elles se situent au niveau d'une partie centrale 28 de la paroi 26.

La paroi 26 comprend également un bord relevé 27. Le bord relevé 27 est situé sur tout ou partie de la périphérie du couvercle 25. Ici, le bord relevé 27 s'étend le long de toute la périphérie du couvercle 25. Le bord relevé 27 s'étend transversalement à la partie centrale 28 de la paroi 26, notamment perpendiculairement et épouse le contour de ladite partie centrale 28 de la paroi 26, en suivant, par exemple, les formes définies par les oreilles 20. Sur l'exemple illustré à la figure 1, le bord relevé 27 a une hauteur constante, c'est-à-dire qu'une extrémité distale du bord relevé 27 est sensiblement à la même distance de la partie centrale 28 de la paroi 26 tout le long du bord relevé 27. Une fois le couvercle 25 fixé au boîtier 2, le bord relevé 27 est dirigé vers l'extérieur du boîtier 2, c'est-à-dire qu'il fait saillie par rapport à la deuxième face 29 de la partie centrale 28 de la paroi 26.

Le bord relevé 27 comprend un premier et un deuxième grands cotés 65, 67 situés au niveau du premier et deuxième grands cotés 61, 63 du couvercle 25 et un premier et un deuxième petits cotés 66, 68 situés au niveau du premier et du deuxième petits cotés 62, 64 du couvercle 25.

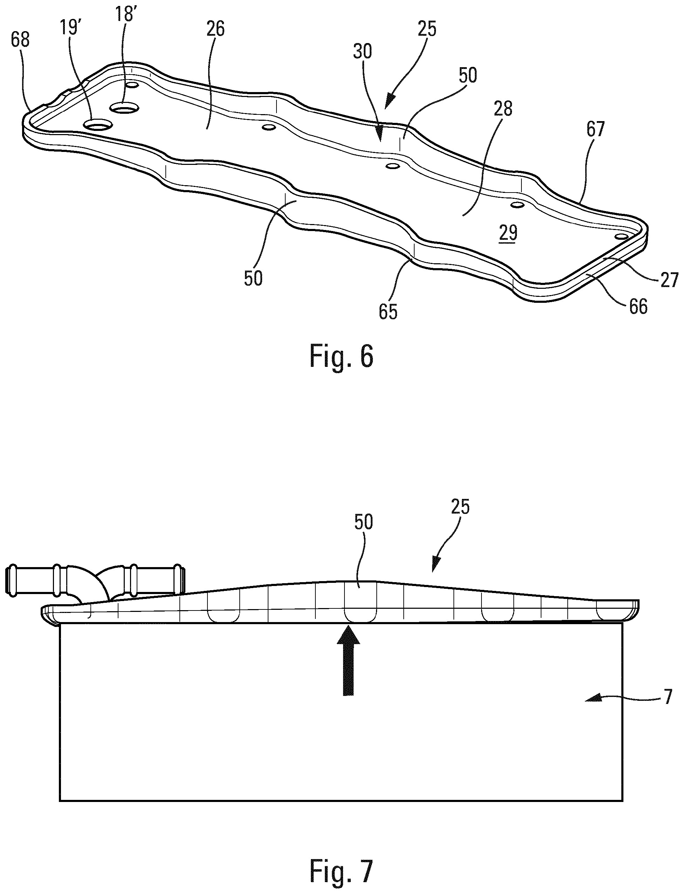

L'échangeur 1 comprend des tubulures d'entrée et/ou de sortie 18, 19, du fluide de refroidissement, communiquant avec des ouvertures (référencées 18', 19' sur la figure 6) prévues dans le couvercle 25 et permettant au fluide de refroidissement d'entrer et/ou de sortir du faisceau 7.

Selon l'invention, le couvercle 25 comprend des moyens 30 de renfort mécanique de la paroi 26. Les moyens 30 de renfort mécanique sont configurés ici pour venir extérieurement en saillie du boîtier 2, c'est-à-dire qu'ils sont en saillie par rapport à la deuxième face 29 de la partie centrale 28 de la paroi 26.

Les figures 2 et 3 illustrent le mode de réalisation du couvercle 25 dans lequel les moyens 30 de renfort mécanique comprennent au moins une nervure 31, 32, 33 de renforcement mécanique. Les nervures 31, 32, 33 se trouvent, par exemple, au niveau de la partie centrale 28 de la paroi 26, c'est-à-dire dans une zone différente de celle occupée par le bord relevé 27. Les nervures 31, 32, 33 sont réalisées, par exemple, par emboutissage de la paroi 26. Elles comprennent, par exemple, des bossages 31', présents, notamment, aux extrémités longitudinales des nervures et en particulier entre leurs extrémités longitudinales. Ces bossages 31', s'étendent transversalement à l'extension longitudinale des nervures 31, 32, 33 et augmentent les caractéristiques de renfort mécanique des nervures 31, 32, 33.

Les moyens 30 de renfort mécanique comprennent ici des grandes nervures 31, 32, en particulier deux grandes nervures 31, 32, qui s'étendent sensiblement parallèlement entre elles selon une longueur du couvercle 25. Du fait de leurs extensions longitudinales, les grandes nervures renforcent ici la paroi 26 contre une déformation en flexion selon différentes directions.

Selon l'exemple de réalisation illustré à la figure 3, au moins une autre des nervures, dite petite nervure 33, relie entre elles les grandes nervures 31, 32. Les moyens de renfort mécanique comprennent ici six petites nervures 33. Les petites nervures 33, s'étendent, notamment, perpendiculairement entre les grandes nervures 31, 32 et pourront dépasser celles-ci au niveau des bossages 31'.

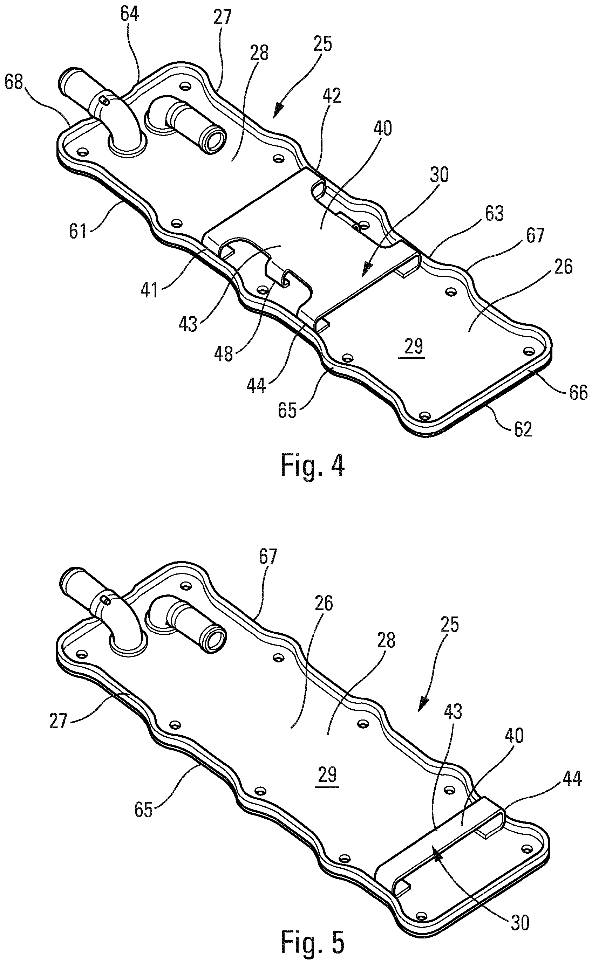

La figure 4 représente le mode de réalisation du couvercle 25 dans lequel les moyens 30 de renfort mécanique comprennent au moins un arceau 40 de renfort mécanique solidarisé à la paroi 26. L'arceau 40 est solidarisé au couvercle 25 au niveau du premier et du deuxième grands cotés 61, 63 du couvercle 25. L'arceau 40 comprend, par exemple, au moins un point de solidarisation 41 au niveau du premier grand coté 65 du bord relevé 27 et un point de solidarisation 42 au niveau du deuxième grand coté 67 du bord relevé 27. L'arceau 40 comprend, notamment, au moins un point de solidarisation 48 à une face plane de la paroi 26, ici la deuxième face 29.

L'arceau 40 pourra comprendre un corps central 43 sensiblement de forme rectangulaire et des languettes 44 solidarisées à la paroi 26 au niveau du bord relevé 27 et de la deuxième face 29. Le corps central 43 est sensiblement plan. Les languettes 44 ont une section transversale en forme de U et prennent naissance au niveau du corps central 43. Dans l'exemple illustré à la figure 4, l'arceau 40 comprend six languettes 44. Il comprend deux languettes 44 solidarisées au premier grand coté 65 du bord relevé 27 et à la deuxième face 29 de la paroi 26, deux languettes 44 solidarisées au deuxième grand coté 67 du bord relevé 27 et à la deuxième face 29 de la paroi 26, et deux languettes 44 solidarisées uniquement à la deuxième face 29 de la paroi 26. Les languettes 44 solidarisées aux grands cotés 65, 67 du bord relevé 27, le sont par l'intermédiaire de la partie centrale du U. Une première des deux branches latérale du U des languettes 44 est reliée au corps central 43 et une deuxième des deux branches latérale du U des languettes 44 est solidarisée avec la deuxième face 29 de la paroi 26.

La figure 5 illustre un exemple de réalisation dans lequel l'arceau 40 est simplifié et comprend deux languettes 44 opposées entre elles par rapport au corps 43. Une des deux languettes 44 est solidarisée au premier grand coté 65 du bord relevé 27 et l'autre des deux languettes 44 est solidarisée au deuxième grand coté 67 du bord relevé 27. Le corps centrale 43 présente, notamment, la même dimension que les languettes 44 suivant l'extension longitudinale du couvercle 25.

Bien qu'un seul arceau 40 ne soit représenté sur les deux exemples de réalisation illustrés aux figures 4 et 5, il est bien sur possible de solidariser plusieurs arceaux 40 sur le même couvercle 25 afin d'augmenter sa résistance mécanique. Il est aussi prévu par l'invention de disposer un ou plusieurs arceaux 40 comprenant six languettes 44 avec un ou plusieurs arceaux 40 comprenant deux languettes 44.

Les figures 6 et 7 illustrent le mode de réalisation du couvercle 25 dans lequel les moyens 30 de renfort comprennent une surélévation 50 localisée du bord relevé 27. La surélévation 50 est présente ici au niveau du premier et du deuxième grands cotés 65, 67 du bord relevé 27. On entend par surélévation le fait que le bord relevé 27 est plus haut par rapport à la deuxième face 29 de la paroi 26 au niveau de la surélévation 50. Cette surélévation 50 possède son point le plus haut, notamment, dans une zone médiane du couvercle 25 et par exemple au milieu des grands cotés 65, 67 du bord relevé 27. La surélévation est la plus haute au niveau d'une zone centrale du couvercle 25 afin de renforcer au maximum cette zone qui est susceptible de subir le plus de contraintes.

La surélévation est, par exemple, identique sur le premier et sur le deuxième grands cotés 65, 67 du bord relevé 27. Les petits cotés 66, 68, ne présentent pas ici de surélévation. La surélévation 50 est, notamment de la forme d'un triangle isocèle, le sommet entre les deux cotés identiques du triangle étant le point le plus haut de la surélévation 50 par rapport à la deuxième face 29 de la paroi 26.

Selon un exemple de réalisation de l'invention non illustré, les moyens de renfort mécanique comprennent au moins une barrette de renforcement mécanique. La ou les barrettes sont solidarisées sur tout ou partie de la périphérie du couvercle.

Une première des barrettes est, par exemple, solidarisée le long du premier grand coté du couvercle et une deuxième des barrettes est, notamment, solidarisée le long du deuxième grand coté du couvercle.

Une troisième des barrettes est, par exemple, solidarisée le long du premier petit coté du couvercle et/ou une quatrième des barrettes est, notamment, solidarisée le long du deuxième petit coté du couvercle. Dans cet exemple, les barrettes sont disposées sur toute la périphérie du couvercle. A l'inverse, il pourra être prévu une barrette unique, le long du premier grand côté du couvercle, prévu du côté de la face d'entrée du fluide à refroidir.

Les barrettes sont de section transversale à quatre cotés. Elles comprennent une première face destinée à être dirigée vers l'extérieur du boîtier, une deuxième face en contact avec la deuxième face de la paroi et des faces latérales reliant leur première et leur deuxième faces.

Selon un exemple de réalisation, les barrettes sont brasées sur le couvercle. Les barrettes sont alors en métal. Alternativement, les barrettes sont maintenues sur le couvercle par clinchage. Elles peuvent également être fixées au couvercle par vissage ou par rivetage. Les barrettes sont alors en plastique ou en métal.

En variante, les barrettes sont solidarisées, par exemple, simultanément à la fixation du couvercle sur le boîtier. Le vissage ou le rivetage de la barrette sur le couvercle se fait alors simultanément à celui du couvercle sur le boîtier.

Bien que les différents exemples de réalisation des moyens de renforts aient été présentés séparément, il est bien évident que des combinaisons de ces différents exemples, c'est-à-dire l'association de deux ou plusieurs de ces exemples sur le même couvercle sont possibles.

## Revendications

1. Echangeur de chaleur (1) comprenant un faisceau (7) permettant la circulation d'un fluide de refroidissement, et un boîtier (2) accueillant ledit faisceau (7) et étant apte à guider un fluide à refroidir, ledit faisceau (7) comprenant un couvercle (25) de forme sensiblement rectangulaire, ledit couvercle (25) étant solidarisé au boîtier (2) et comprenant une paroi (26) destinée à obturer un orifice (5) d'introduction du faisceau (7) d'échange de chaleur dans le boîtier (2), ladite paroi (26) étant configurée pour autoriser une fixation amovible du couvercle (25) sur le boîtier (2) **caractérisé en ce que** ladite paroi (26) présente un bord relevé (27), et **en ce que** le couvercle (25) comprend en outre des moyens (30) de renfort mécanique de ladite paroi (26), lesdits moyens (30) de renfort comprenant une surélévation localisée (50) du bord relevé (27) au niveau des grands côtés du rectangle, ledit bord relevé (27) étant plus haut par rapport à la face plane dans une zone médiane du couvercle (25) qu'au niveau des zones d'extrémités dudit couvercle (25).

2. Echangeur de chaleur (1) selon la revendication 1, dans lequel les moyens (30) de renfort mécanique sont configurés pour venir extérieurement en saillie du boîtier (2).

3. Echangeur de chaleur (1) selon la revendication 1 ou 2, dans lequel les moyens (30) de renfort mécanique comprennent au moins une nervure (31, 32, 33) de renforcement mécanique.

4. Echangeur de chaleur (1) selon la revendication 3, dans lequel la ou les nervures (31, 32, 33) sont réalisées par emboutissage de la paroi (26).

5. Echangeur de chaleur (1) selon la revendication 3 ou 4, dans lequel tout ou partie des nervures, dites grandes nervures (31, 32), s'étendent parallèlement entre elles selon une longueur dudit couvercle (25).

6. Echangeur de chaleur (1) selon la revendication 5, dans lequel au moins une autre des nervures, dite petite nervure (33), relie entre elles les grandes nervures (31, 32).

7. Echangeur de chaleur (1) selon l'une quelconque des revendications 1 à 6, dans lequel les moyens (30) de renfort mécanique comprennent au moins une barrette de renforcement mécanique solidarisée sur tout ou partie d'une périphérie dudit couvercle (25).

8. Echangeur de chaleur (1) selon la revendication 7, dans lequel une première des barrettes est solidarisée le long d'un premier grand coté (61) du couvercle (25) et/ou une deuxième des barrettes est solidarisée le long d'un deuxième grand coté (63) du couvercle (25).

9. Echangeur de chaleur (1) selon l'une quelconque des revendications précédentes, dans lequel lesdits moyens (30) de renfort comprennent au moins un arceau (40) de renfort mécanique solidarisé à la paroi (26).

10. Echangeur de chaleur (1) selon la revendication 9, dans lequel l'arceau (40) comprend au moins un point de solidarisation (41) sur le bord relevé (27) au niveau d'un premier grand coté (65) dudit bord relevé (27) et un point de solidarisation (42) sur le bord relevé (27) au niveau d'un deuxième grand coté (67) dudit bord relevé (27).

11. Echangeur de chaleur (1) selon la revendication 9 ou 10, dans lequel l'arceau (40) comprend au moins un point de solidarisation (48) à une face plane (29) de ladite paroi (26).

12. Module d'admission d'air pour moteur thermique de véhicule automobile comprenant un échangeur (1) selon l'une des revendications précédentes.

## Patentansprüche

1. Wärmetauscher (1), welcher ein Rohrbündel (7), das die Zirkulation eines Kühlfluids ermöglicht, und ein Gehäuse (2), welches das Rohrbündel (7) aufnimmt und in der Lage ist, ein zu kühlendes Fluid zu leiten, umfasst, wobei das Rohrbündel (7) umfasst:
einen Deckel (25) von im Wesentlichen rechteckiger Form, wobei der Deckel (25) fest mit dem Gehäuse (2) verbunden ist und eine Wand (26) umfasst, die dazu bestimmt ist, eine Öffnung (5) zur Einführung des Wärmeaustauschrohrbündels (7) in das Gehäuse (2) zu verschließen, wobei die Wand (26) dafür ausgebildet ist, eine lösbare Befestigung des Deckels (25) am Gehäuse (2) zu ermöglichen,
**dadurch gekennzeichnet, dass** die Wand (26) eine hochstehende Kante (27) aufweist, und dadurch, dass der Deckel (25) außerdem Mittel (30) zur mechanischen Verstärkung der Wand (26) umfasst, wobei diese Verstärkungsmittel (30) eine lokale Erhöhung (50) der hochstehenden Kante (27) an den langen Seiten des Rechtecks umfasst, wobei die hochstehende Kante (27), bezogen auf die ebene Seite, in einem mittleren Bereich des Deckels (25) höher als an den Endbereichen des Deckels (25) ist.

2. Wärmetauscher (1) nach Anspruch 1, wobei die Mittel (30) zur mechanischen Verstärkung dafür ausgebildet sind, vom Gehäuse (2) nach außen vorzustehen.

3. Wärmetauscher (1) nach Anspruch 1 oder 2, wobei die Mittel (30) zur mechanischen Verstärkung wenigstens eine Rippe (31, 32, 33) zur mechanischen Verstärkung umfassen.

4. Wärmetauscher (1) nach Anspruch 3, wobei die Rippe oder die Rippen (31, 32, 33) durch Tiefziehen der Wand (26) hergestellt sind.

5. Wärmetauscher (1) nach Anspruch 3 oder 4, wobei alle Rippen oder ein Teil der Rippen, große Rippen (31, 32) genannt, sich parallel zueinander in einer Längsrichtung des Deckels (25) erstrecken.

6. Wärmetauscher (1) nach Anspruch 5, wobei wenigstens eine weitere der Rippen, kleine Rippe (33) genannt, die großen Rippen (31, 32) miteinander verbindet.

7. Wärmetauscher (1) nach einem der Ansprüche 1 bis 6, wobei die Mittel (30) zur mechanischen Verstärkung wenigstens eine Leiste zur mechanischen Verstärkung umfassen, die auf dem gesamten Umfang des Deckels (25) oder einem Teil davon fest angebracht ist.

8. Wärmetauscher (1) nach Anspruch 7, wobei eine erste der Leisten entlang einer ersten langen Seite (61) des Deckels (25) fest angebracht ist und/oder eine zweite der Leisten entlang einer zweiten langen Seite (63) des Deckels (25) fest angebracht ist.

9. Wärmetauscher (1) nach einem der vorhergehenden Ansprüche, wobei die Verstärkungsmittel (30) wenigstens einen Bügel (40) zur mechanischen Verstärkung umfassen, der mit der Wand (26) fest verbunden ist.

10. Wärmetauscher (1) nach Anspruch 9, wobei der Bügel (40) wenigstens einen Punkt der festen Verbindung (41) an der hochstehenden Kante (27) an einer ersten langen Seite (65) der hochstehenden Kante (27) und einen Punkt der festen Verbindung (42) an der hochstehenden Kante (27) an einer zweiten langen Seite (67) der hochstehenden Kante (27) umfasst.

11. Wärmetauscher (1) nach Anspruch 9 oder 10, wobei der Bügel (40) wenigstens einen Punkt der festen Verbindung (48) mit einer ebenen Seite (29) der Wand (26) umfasst.

12. Luftansaugmodul für eine Brennkraftmaschine eines Kraftfahrzeugs, welches einen Wärmetauscher (1) nach einem der vorhergehenden Ansprüche umfasst.

## Claims

1. Heat exchanger (1) comprising a bundle (7) for the flow of a cooling fluid, and a housing (2) accommodating said bundle (7) and able to guide a fluid to be cooled, said bundle (7) comprising a cover (25) of substantially rectangular shape, said cover (25) being secured to the housing (2) and comprising a wall (26) intended to close off an orifice (5) for introducing the heat exchange bundle (7) into the housing (2), said wall (26) being configured to allow the cover (25) to be fastened removably to the housing (2), **characterized in that** said wall (26) has a raised edge (27), and **in that** the cover (25) also comprises means (30) for mechanically reinforcing said wall (26), said reinforcement means (30) comprising a local section of increased height (50) of the raised edge (27) at the long sides of the rectangle, said raised edge (27) being higher with respect to the flat face in a median zone of the cover (25) than in the end zones of said cover (25).

2. Heat exchanger (1) according to Claim 1, wherein the mechanical reinforcement means (30) are configured to protrude outwardly from the housing (2).

3. Heat exchanger (1) according to Claim 1 or 2, wherein the mechanical reinforcement means (30) comprise at least one mechanical strengthening rib (31, 32, 33).

4. Heat exchanger (1) according to Claim 3, wherein the rib(s) (31, 32, 33) are produced by stamping the wall (26) .

5. Heat exchanger (1) according to Claim 3 or 4, wherein all or some of the ribs, referred to as large ribs (31, 32), extend parallel to one another along a length of said cover (25).

6. Heat exchanger (1) according to Claim 5, wherein at least one other of the ribs, referred to as small rib (33), joins the large ribs (31, 32) together.

7. Heat exchanger (1) according to any one of Claims 1 to 6, wherein the mechanical reinforcement means (30) comprise at least one mechanical strengthening bar secured to all or part of a periphery of said cover (25).

8. Heat exchanger (1) according to Claim 7, wherein a first of the bars is secured along a first long side (61) of the cover (25) and/or a second of the bars is secured along a second long side (63) of the cover (25).

9. Heat exchanger (1) according to any one of the preceding claims, wherein said reinforcement means (30) comprise at least one mechanical reinforcement bracket (40) secured to the wall (26).

10. Heat exchanger (1) according to Claim 9, wherein the bracket (40) comprises at least one point (41) for securing to the raised edge (27) at a first long side (65) of said raised edge (27) and a point (42) for securing to the raised edge (27) at a second long side (67) of said raised edge (27).

11. Heat exchanger (1) according to Claim 9 or 10, wherein the bracket (40) comprises at least one point (48) for securing to a flat face (29) of said wall (26).

12. Air intake module for a motor vehicle combustion engine, comprising a heat exchanger (1) according to one of the preceding claims.
